# FASCICULE DE BREVET EUROPEEN

(11) **EP 1 658 762 B1**
(45) Date de publication et mention de la délivrance du brevet: **09.05.2007**
(21) Numéro de dépôt: 05292392.7
(22) Date de dépôt: 10.11.2005
(51) Int. Cl.: A01C 3/02

(54) **Dispositif de couverture de bassin de réception de liquide et dispositif générateur d'air associé à un tel dispositif**
Device for covering liquid reception cisterns and air generator device therefor
Vorrichtung zur Abdeckung von Flüssigkeitbehältern und dafür geeignete Gebläseanordnung

(30) Priorité: 17.11.2004 FR 0412188; 17.11.2004 FR 0412189
(43) Date de publication de la demande: 24.05.2006
(73) Titulaire: Chauveau, André, 85570 Petosse (FR); Chauveau, Jaqueline, 85570 Petosse (FR)
(72) Inventeur: Chauveau, André, 85570 Petosse (FR); Chauveau, Jaqueline, 85570 Petosse (FR)
(74) Mandataire: Laget, Jean-Loup

(56) Documents cités:
- WO-A-01/92137
- WO-A-03/018437
- US-A- 3 801 994
- US-A- 4 685 254
- US-B1- 6 694 539

## Description

La présente invention concerne un dispositif de couverture de bassin de réception de liquide, en particulier pollueur d'atmosphère, tel que du lisier, ainsi qu'un dispositif générateur d'air apte à être associé à un tel dispositif de couverture.

Les bassins de collecte d'effluents divers, tels qu'eaux usées, de lisier ou autres liquides, en particulier pollueurs d'atmosphère, notamment en raison de leur odeur nauséabonde, doivent être fermés de manière la plus étanche possible. Cette fermeture s'effectue généralement à l'aide d'une couverture imperméable, de type bâche, arrimée par des moyens divers et variés à la périphérie du bassin. De telles couvertures n'étant pas supportées en leur centre et ne pouvant pas être suffisamment tendues lorsque les surfaces à couvrir sont importantes, il en résulte la formation d'une poche qui trempe dans le liquide. Cette poche recueille les eaux de pluie au lieu de les évacuer. Les risques sont à terme un effondrement de la poche dans le bassin ou une déchirure de cette dernière. Pour éviter la formation d'une telle poche, il est possible de pratiquer, dans cette poche, des perçages qui permettent l'infiltration des eaux de pluie et de ruissellement dans le bassin. Outre le fait que la fermeture n'est dans ce cas plus étanche, on augmente de manière importante le niveau des liquides collectés, ce qui n'est souvent pas souhaitable.

Pour résoudre ce problème, il est connu, comme l'illustre en particulier le brevet FR-A-2.479.881, de placer sous la bâche un flotteur réalisé sous forme d'un ballon gonflable qui imprime à la bâche une forme convexe. Ce flotteur peut se présenter sous la forme d'une succession de boudins parallèles comme l'illustre le brevet FR-A-2.561.699.

De tels dispositifs évitent les inconvénients provoqués par une surcharge de l'eau de pluie reçue dans la bâche concave. Toutefois, de tels dispositifs ne donnent entière satisfaction que lorsque le niveau du bassin à couvrir est maintenu constant. En effet, dès que le niveau du bassin varie ou lorsque le dispositif de couverture est destiné à être utilisé pendant une année complète, au cours de laquelle des variations de température amènent à un gonflement important de la chambre à air, le dispositif devient inefficace amenant soit à un risque d'éclatement de la poche, en particulier lorsqu'une élévation de température importante est constatée, soit à un gonflage insuffisant de la chambre à air lorsque par exemple le niveau de liquide dans la cuve baisse de telle sorte que la forme de dôme n'est plus respectée.

L'installation décrite dans la demande de brevet internationale WO 01/92137 n'échappe pas aux inconvénients mentionnés ci-dessus. En effet, ce document décrit un dispositif flottant pour couverture de piscine dans lequel la structure gonflable, destinée à recouvrir le bassin, est formée par deux bâches solidarisées de manière étanche entre elles. Des moyens de contrôle du niveau de liquide sont prévus afin d'asservir le dégonflage de la structure aux données issues desdits moyens. Ces moyens de contrôle sont constitués d'une tige chargée par ressort agissant sur un clapet 17 de fermeture de la chambre gonflable, cette tige étant entraînée en déplacement par l'intermédiaire d'un flotteur 20 lors d'une augmentation du niveau de liquide dans le bassin. Ce document décrit donc l'asservissement du dégonflage de la chambre à une augmentation du niveau de liquide. Toutefois, en cas de baisse du niveau de liquide dans le bassin, ce dispositif ne permet pas de conserver la forme externe qui a été conférée au dôme par la coopération de la chambre à air et de l'élément de couverture. De manière analogue, en cas de variation de température provoquant un gonflement important de la chambre à air ou, à l'inverse, un dégonflement important de cette dernière, on constate à nouveau des modifications de la forme du dôme obtenue par la coopération de la bâche et de la chambre à air, modifications de forme qui ne peuvent pas être prises en compte par le dispositif tel que décrit dans la demande de brevet internationale WO 01/92137. Le risque est de voir apparaître, au niveau de la bâche, la formation d'une cuvette de rétention des eaux, notamment des eaux pluviales.

La demande de brevet internationale WO 03/018437 décrit un dispositif de couverture pour réservoir comprenant une membrane recouvrant les bords dudit réservoir, cette membrane étant maintenue en forme par un mât gonflable. Ce mât est constitué d'une partie supérieure permettant de maintenir la membrane au dessus du réservoir et d'une partie inférieure flottante et compressible sous l'effet de l'augmentation de la pression hydrostatique due à l'augmentation du niveau du contenu du réservoir (page 3 lignes 18 à 21). Le gonflage et/ou le dégonflage du mât gonflable ne sont donc en rien asservis en fonctionnement à la forme du dôme obtenu. A nouveau, un tel dispositif de couverture est incapable de détecter un dégonflage important ou un gonflage important du mât lié à des variations de température, ce gonflage ou ce dégonflage pouvant soit avoir une incidence sur la forme du dôme, soit engendrer un risque d'éclatement de la chambre à air constitutive du mât.

D'autres dispositifs, tels que les brevets US-A-3.801.994, US-A-4.685.254 et US-A-6.694.539 s'appliquent uniquement à un dispositif de couverture de piscine pour lesquels la problématique d'une variation importante du niveau de l'eau n'est souvent pas présente. Ces dispositifs permettent simplement le gonflage d'un élément pousseur pour conférer à l'élément de bâche une forme de dôme. A nouveau, il n'est pas prévu d'asservir de quelle que manière que ce soit le gonflage ou le dégonflage de la chambre à air formant pousseur à la forme du dôme pour maintenir constante cette dernière.

Un but de la présente invention est de proposer un dispositif de couverture de bassin et un dispositif générateur d'air dont les conceptions permettent de maintenir sensiblement constante la forme du dôme de couverture quelles que soient les variations de niveau de liquide dans le bassin et quelles que soient les conditions atmosphériques extérieures.

A cet effet, l'invention a pour objet un dispositif de couverture de bassin de réception de liquide, en particulier pollueur d'atmosphère, tel que du lisier, ce dispositif comprenant principalement une bâche de couverture venant à recouvrement sur les bords du bassin pour isoler le contenu du bassin avec l'atmosphère environnante, au moins une chambre à air conférant à la bâche de couverture une forme de dôme en vue de permettre l'évacuation des eaux de ruissellement, notamment celles issues des intempéries, cette chambre à air étant gonflable par raccordement à un dispositif générateur d'air pourvu généralement d'au moins un canal d'insufflation d'air, caractérisé en ce que le dispositif de couverture comporte en outre des moyens de détection de la forme du dôme qui asservissent le gonflage et/ou le dégonflage de la chambre à air, conférant au dispositif de couverture sa forme de dôme, aux modifications de forme du dôme résultant notamment de variations de la température extérieure et/ou de variations du niveau de liquide dans le bassin de manière, notamment, à pouvoir maintenir sensiblement constante la forme du dôme, y compris lors de variations du niveau du bassin ou de la température extérieure.

Grâce à la conception du dispositif de couverture, et en particulier à la présence des moyens de détection de la forme du dôme qui asservissent le gonflage et/ou le dégonflage de la chambre à air ou poche aux modifications de forme du dôme, il est possible de maintenir sensiblement constante la forme du dôme, y compris lors de variations du niveau du liquide dans le bassin et/ou lors d'un changement de temps amenant à des variations de température à l'intérieur d'une large plage. De ce fait, la formation d'une cuvette au niveau de la bâche ou un éclatement de la chambre à air par surgonflage sont évités. Il doit être noté que par forme du dôme, on entend la forme de la face apparente du dispositif de couverture qui résulte de la coopération de la chambre à air et de l'élément de couverture de type bâche, que ceux-ci soient réalisés sous forme d'éléments indépendants ou d'une seule pièce. La modification de la forme du dôme peut donc résulter soit d'un gonflage ou d'un dégonflage de la chambre à air, soit d'une variation du niveau de liquide dans le bassin entraînant une modification de la position de la chambre à air dans le bassin et par suite, une modification du dôme formé.

Selon une forme de réalisation préférée de l'invention, la chambre à air est, au moins en dehors des périodes de gonflage, apte à être mise à l'échappement pour créer une fuite d'air permanente ou temporaire.

L'invention a encore pour objet un dispositif générateur d'air pour le gonflage d'au moins une chambre à air d'un dispositif de couverture en forme de dôme, du type venant à recouvrement de la surface d'un bassin de réception de liquide, en particulier pollueur d'atmosphère, pour isoler le contenu du bassin avec l'atmosphère environnante, ce dispositif générateur d'air comportant des moyens d'insufflation d'air comprenant au moins un canal d'insufflation d'air, de préférence obturable, muni en entrée d'une soufflerie et raccordé en sortie à au moins une chambre à air du dispositif de couverture du type précité, caractérisé en ce que le générateur d'air est couplé à des moyens de détection de la forme du dôme qui asservissent le fonctionnement des moyens d'insufflation d'air à la forme du dôme pour maintenir, de préférence sensiblement constante, la forme du dôme en vue de permettre l'évacuation des eaux de ruissellement, notamment celles issues des intempéries.

L'invention a donc encore pour objet un dispositif générateur d'air du type comportant des moyens d'insufflation d'air comprenant au moins un canal d'insufflation d'air muni en entrée d'une soufflerie, le canal d'insufflation d'air étant agencé pour être raccordé en sortie à la chambre à air d'un dispositif de couverture de préférence du type précité.

Selon une forme de réalisation préférée du générateur, le générateur d'air comporte, raccordables à la chambre à air du dispositif de couverture, un canal d'insufflation d'air et un canal d'échappement d'air, de préférence obturable, apte à créer, au niveau de la chambre à air, une fuite, éventuellement permanente au moins en dehors des périodes de gonflage, pour maintenir sensiblement constante la forme du dôme, le canal d'insufflation d'air et le canal d'échappement d'air du générateur d'air étant de préférence constitués, sur au moins une partie de leur longueur, par un seul et même canal raccordable à la chambre à air du dispositif de couverture.

De préférence, le canal d'échappement d'air est muni d'un organe de fermeture, tel qu'un clapet, réglable en position pour créer une fuite d'air de débit ajustable, cet organe de fermeture du canal d'échappement d'air étant de préférence asservi en fonctionnement aux moyens de détection de la forme du dôme.

L'invention sera bien comprise à la lecture de la description suivante d'exemples de réalisation, en référence aux dessins annexés dans lesquels :
la figure 1 représente une vue schématique en coupe d'un dispositif conforme à l'invention à l'état installé dans un bassin de réception de liquide ;
la figure 2 représente une vue en coupe du dispositif de la figure 1 après augmentation du niveau de liquide à l'intérieur dudit bassin ;
la figure 3 représente une vue schématique partielle du générateur d'air permettant le gonflage de la poche constitutive de l'élément pousseur ;
la figure 4 représente une vue schématique en coupe d'un autre mode de réalisation d'un dispositif générateur d'air associé à la chambre à air d'un dispositif de couverture en forme de dôme et
la figure 5 représente une vue de dessus d'un plan de soutien d'une chambre à air équipant un dispositif de couverture conforme à celui représenté à la figure 4.

Comme mentionné ci-dessus, le dispositif de couverture, objet de l'invention, est plus particulièrement destiné au recouvrement de bassin 1 de réception de liquide 18, en particulier pollueur d'atmosphère, tel qu'effluent d'origines diverses, lisier ou autre. Le bassin 1 à couvrir peut par exemple être constitué d'une géomembrane dont les bords sont enfouis à l'intérieur d'une tranchée 2 ménagée à la périphérie de la fosse dont le fond est recouvert de la géomembrane. Ce bassin 1 peut, de manière équivalente, être réalisé à l'aide d'une cuve préfabriquée généralement en béton.

Ce bassin 1 ainsi constitué est ensuite rempli de fluide 18 qui peut être d'origine diverse. L'alimentation en fluide de ce bassin peut être permanente ou périodique. Avant le premier remplissage ou une fois le premier remplissage de bassin 1 effectué, le dispositif de couverture peut être mis en place.

Ce dispositif de couverture comprend une bâche 3 de couverture venant à recouvrement sur les bords du bassin 1 pour isoler le contenu du bassin 1 avec l'atmosphère environnante et une chambre 4 à air formant élément pousseur pour conférer à la bâche 3 de couverture une forme de dôme. La bâche 3 de couverture et la chambre 4 à air peuvent être réalisées d'une seule pièce ou sous forme de deux éléments indépendants et ce, de manière équivalente. Dans le premier cas, c'est la face apparente de la chambre à air qui forme bâche.

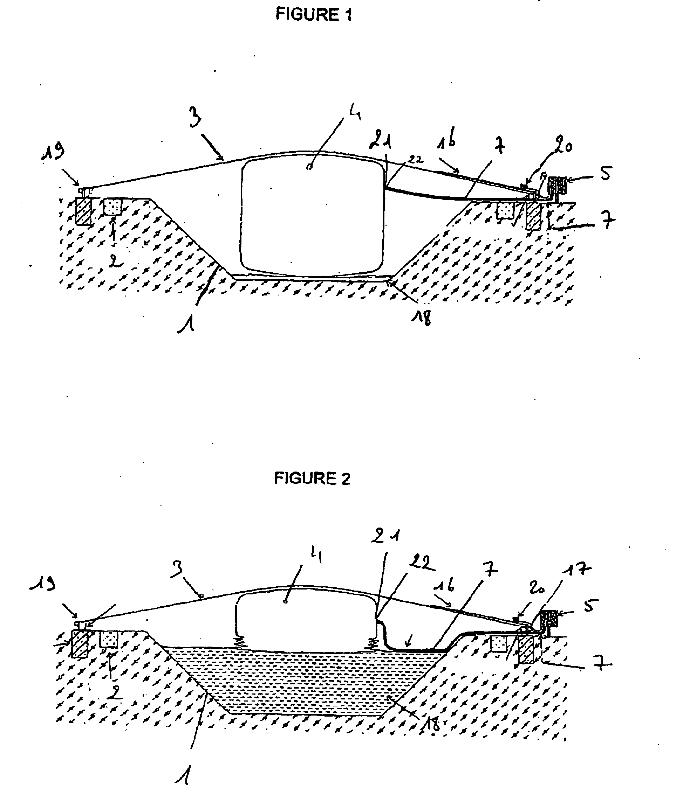

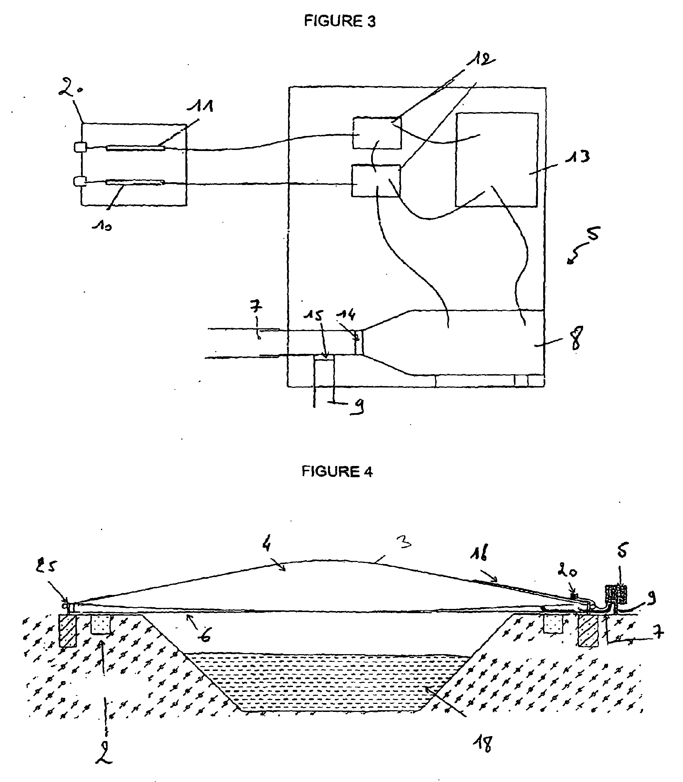

Deux modes de réalisation d'un dispositif de couverture sont fournis aux figures 2 et 4.

Ainsi, dans l'exemple représenté aux figures 1 et 2, le dispositif de couverture en forme de dôme comprend principalement une bâche 3 de couverture venant à recouvrement sur les bords du bassin pour isoler le contenu du bassin 1 avec l'atmosphère environnante. Cette bâche 3 de couverture, constituée d'une toile imperméable pourvue d'une bavette d'étanchéité périphérique, peut être ancrée de différentes manières sur les bords du bassin. Par exemple, il peut être prévu, sur le pourtour du bassin, une armature 19 qui sert à la fixation des bords de la bâche 3 de couverture. Préalablement au positionnement de cette bâche 3 de couverture, un élément pousseur flottant est disposé à la surface du contenu du bassin pour conférer en permanence à la bâche 3 la forme d'un dôme. Cet élément pousseur flottant se présente généralement sous forme d'au moins une chambre 4 à air gonflable par raccordement à un dispositif 5 générateur d'air. Cette poche 4 gonflable est ainsi positionnée à la surface du liquide et est gonflée pour occuper un volume fonction de la forme que l'on souhaite conférer à la bâche 3 de couverture. Une fois l'élément pousseur 4 flottant positionné à la surface du liquide retenu à l'intérieur du bassin 1 de réception, la bâche 3 de couverture peut être mise en place. Du fait de la présence du pousseur 4 flottant, la bâche 3 affecte la forme d'un dôme. Ce dôme permet l'évacuation des eaux de ruissellement le long de la bâche 3 et leur évacuation.

Dans les exemples représentés aux figures 1 et 2, le bassin 1 est délimité au moyen d'une géomembrane dont les bords sont enfouis à l'intérieur d'une tranchée 2. Le liquide 18, contenu à l'intérieur du bassin 1, peut être de nature diverse. Il est généralement constitué soit par un effluent, soit par du lisier ou par tout autre liquide pollueur d'atmosphère.

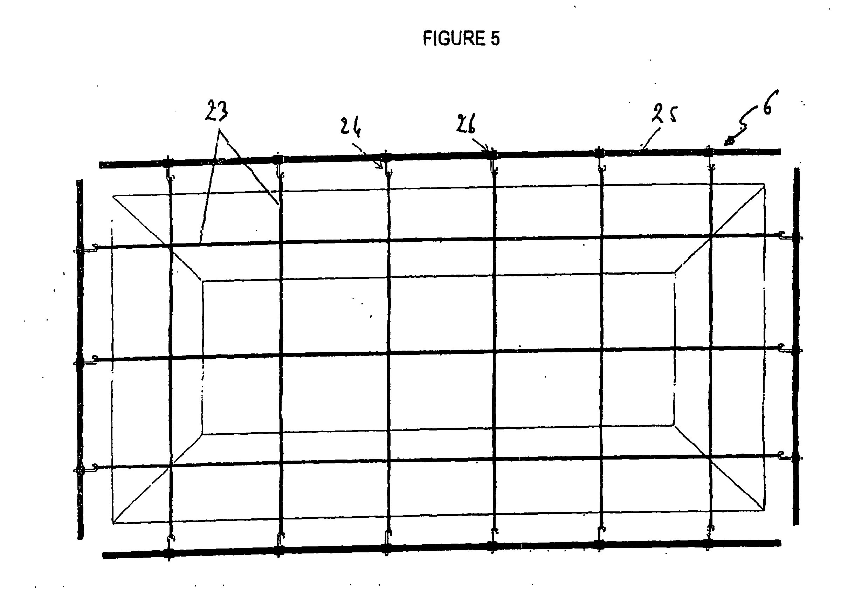

Dans un autre mode de réalisation représenté aux figures 4 et 5, le bassin est formé de manière analogue à ce qui a été décrit aux figures 1 et 2. Une solution dans laquelle le bassin serait réalisé par exemple au moyen d'une cuve préfabriquée en béton serait bien évidemment une solution équivalente.

Dans les exemples des figures 4 et 5, la chambre 4 à air, associée à un élément de couverture de type bâche 3, est positionnable en appui sur un plan 6 de soutien généralement de type caillebotis venant à recouvrement du plan d'ouverture du bassin 1 pour former un élément pousseur conférant à la bâche 3 la forme d'un dôme.

Dans cet exemple, la chambre 4 à air forme bâche car elle est réalisée d'une seule pièce avec la bâche 3. Une solution équivalente aurait été obtenue par réalisation de la chambre 4 à air formant pousseur et de l'élément 3 de couverture sous forme de deux pièces indépendantes. Le plan 6 de soutien de la chambre 4 de type caillebotis venant à recouvrement du plan d'ouverture du bassin 1. Ce plan 6 de soutien confère à la chambre 4 à air, maintenue en position d'appui sur le plan 6 de soutien et à l'élément 3 de bâche associé, une forme de dôme.

Dans ce mode de réalisation, le plan 6 de soutien est, comme l'illustre la figure 5, constitué de sangles 23 entrecroisées dont les extrémités sont fixées à une lisse 25 périphérique au bassin 1 pour former un maillage, de préférence de type quadrillage, venant à recouvrement du plan d'ouverture du bassin. La chambre 4 à air du dispositif de couverture surmonte ce plan 6 de soutien et est conformée pour venir à recouvrement étanche de la totalité de la surface du bassin. La lisse 25 périphérique est supportée de place en place par des poteaux 26 et est raccordée aux sangles 23 par l'intermédiaire de crochets de tension 24. Bien évidemment, d'autres modes de réalisation de ce plan 6 de soutien peuvent être envisagés. Ainsi, les sangles peuvent être raccordées au niveau de leurs extrémités directement au pourtour périphérique du bassin, réduisant ainsi l'encombrement de l'ensemble.

De manière caractéristique à l'invention, pour permettre l'adaptation de ce dispositif et en particulier le maintien d'une forme de dôme au niveau de la bâche 3 de couverture, quel que soit le niveau de liquide à l'intérieur du bassin 1, il est prévu des moyens 10, 11 de détection de la forme du dôme qui asservissent le gonflage et/ou le dégonflage de la chambre 4 à air constitutive de l'élément pousseur et donc le fonctionnement du générateur d'air aux modifications de forme du dôme résultant des changements de niveau dans le bassin 1 ou de variations de températures. Ainsi, lorsqu'il est constaté un changement de forme au niveau du dôme, par exemple une réduction de la hauteur de ce dôme, liée par exemple à une baisse du niveau de liquide ou de la température, un gonflage de la chambre à air constitutive de l'élément pousseur est commandé. A l'inverse, lorsque la hauteur de ce dôme s'accroît de manière trop importante, lors par exemple d'une augmentation de la température ou du niveau de liquide, les moyens d'asservissement, en particulier de détection de la forme du dôme, peuvent agir soit sur les moyens de gonflage en commandant leur arrêt, soit sur les moyens de dégonflage de ladite chambre. De préférence, le gonflage et/ou le dégonflage de la chambre à air sont asservis exclusivement aux modifications de forme du dôme.

L'asservissement du dégonflage de la chambre à air à la forme du dôme peut soit ne s'opérer que dans certaines conditions, soit s'opérer de manière permanente. C'est la première solution qui sera décrite en détail ci-après.

L'élément pousseur flottant, réalisé sous forme d'un ou plusieurs éléments, peut être constitué d'une chambre 4 à air unique ou d'une pluralité de chambres 4 à air. De préférence, chaque chambre à air du pousseur est, au moins en dehors des périodes de gonflage, mise à l'échappement pour créer une fuite d'air dite permanente. Cette fuite d'air permet en effet d'éviter un éclatement de la chambre lors de variations de température importantes et permet en outre d'assurer un dégonflage progressif de la chambre au fur et à mesure de la montée du niveau du liquide dans le bassin comme l'illustre le passage de la figure 1 à la figure 2 où la poche est partiellement dégonflée. Ainsi, la forme du dôme peut être maintenue constante en dépit d'une élévation du niveau de liquide dans le bassin sans aucune action sur le générateur d'air.

Différents modes de réalisation peuvent être envisagés pour permettre le gonflage de la chambre à air et son dégonflage. Dans tous les cas, la chambre 4 à air comporte au moins une entrée 21 et une sortie 22 d'air. L'entrée 21 d'air est, de préférence, en permanence, raccordée au dispositif 5 générateur d'air, en particulier à un canal 7 d'insufflation d'air dudit générateur 5 pour permettre un gonflage de la poche de la chambre 4 à air lorsque cela est nécessaire. La sortie 22 d'air, obturable, est quant à elle agencée pour être mise à l'échappement au moins en dehors des périodes de gonflage de la chambre 4 à air à nouveau pour créer une fuite d'air généralement permanente. Cette sortie 22 d'air peut ainsi être raccordée à un canal 9 d'échappement d'air muni de préférence d'un organe d'obturation apte à faire varier le débit de la fuite d'air en fonction de sa position. Cet organe d'obturation peut également équiper directement la sortie 22 d'air. Cette entrée 21 et cette sortie 22 d'air de la chambre à air de la chambre 4 à air peuvent être différenciées. Dans les exemples représentés, l'entrée 21 et la sortie 22 d'air de la chambre 4 à air sont constituées par un même orifice raccordable au dispositif 5 générateur d'air. Il en résulte une simplification de l'ensemble. La sortie 22 d'air de la chambre 4 à air pourrait déboucher directement à l'air libre. Tel n'est pas le cas dans l'exemple représenté où cette sortie 22 d'air est raccordée au canal 7 d'insufflation d'air qui comporte lui-même une dérivation 9 débouchant à l'air libre, cette dérivation coopérant à la constitution du canal 9 d'échappement d'air.

Le générateur 5 d'air, qui permet le gonflage de la chambre 4 à air, comporte un canal 7 d'insufflation d'air comme mentionné ci-dessus, qui est muni en entrée de moyens 8 de soufflage tels qu'une turbine. Ce canal 7 d'insufflation d'air, qui s'étend donc entre la turbine et l'entrée 21 d'air de la chambre 4 à air, permet l'alimentation en air de la chambre à air de l'élément pousseur 4 et le gonflage de cette chambre. Le générateur d'air comporte encore un canal 9 d'échappement d'air, de préférence obturable, qui crée une fuite généralement permanente au moins en dehors des périodes de gonflage. Le fonctionnement du générateur d'air, qui est asservi aux modifications de formes du dôme détectées par des moyens appropriés, permet, grâce à ses deux canaux, un maintien sensiblement constant de la forme du dôme.

Dans les exemples représentés, le canal 7 d'insufflation d'air et le canal 9 d'échappement d'air sont constitués, sur au moins une partie de leur longueur, par un seul et même canal raccordable à la chambre 4 à air. Chaque canal est muni d'un organe d'obturation, tel qu'un clapet. L'organe d'obturation du canal 7 d'insufflation est positionné au voisinage de la turbine et est représenté en 14 aux figures tandis que le clapet de fermeture du canal 9 d'échappement d'air est représenté en 15 aux figures. Ce clapet 15 de fermeture du canal 9 d'échappement d'air est réglable en position pour créer une fuite d'air permanente de débit ajustable. En effet, ce clapet 15 est destiné à être toujours ouvert pour permettre un échappement d'air permanent de la chambre 4 à air. Pour autant, la position de cet organe de fermeture est ajustée en fonction du volume de la chambre à air, des variations attendues de niveau de fluide à l'intérieur du bassin, et éventuellement de la période de l'année concernée.

Dans un autre mode de réalisation non détaillé, l'organe 15 de fermeture du canal 9 d'échappement d'air pourrait être ouvert ou fermé en fonction de la forme du dôme pour générer un dégonflage de la chambre asservi à la forme du dôme. Cet asservissement permanent de la position de l'organe 15 de fermeture à la forme du dôme ne sera pas décrit plus en détail ci-après.

La conception du générateur 5 d'air et la disposition des différents canaux permet d'avoir essentiellement un seul canal qui s'étend entre le générateur d'air et la chambre 4 à air. Il en résulte une simplification de la conception.

Dans les exemples représentés, le fonctionnement du générateur 5 d'air, en particulier l'ouverture du canal 7 d'insufflation d'air, pour obtenir un gonflage de la chambre 4 à air, est asservi à la forme du dôme formé par la bâche 3 à l'aide de moyens d'asservissement qui vont être décrits ci-après. En effet, le générateur 5 d'air est couplé à au moins deux capteurs 10, 11 de détection de la position du dôme. Ces deux capteurs 10, 11 sont logés à l'intérieur d'un boîtier représenté en 20 aux figures. La conception de ces capteurs peut être diverse et variée. Dans un mode de réalisation particulier de l'invention, les capteurs peuvent être incorporés dans un dispositif, dit contacteur à bulles. Ces capteurs sont logés à l'intérieur du boîtier 20, lui-même positionné sur un support 16, 17, tel qu'un bras, mobile extérieur au dôme et en appui sur ce dernier pour suivre les changements de forme du dôme. Ainsi, dans les exemples représentés, le générateur 5 d'air comporte un bras extérieur au dôme de type palpeur pour agir sur l'ouverture du canal 7 d'insufflation d'air du générateur d'air lors d'une déformation du dôme de couverture dans le sens d'un affaissement de ce dernier. Ce bras 16 est, à une extrémité, monté à pivotement libre sur un support 17 et vient, à son autre extrémité, en appui sur la face externe de la couverture en forme de dôme. Dans le détail, les capteurs 10, 11 de détection de la forme du dôme, qui sont au nombre de deux, sont constitués l'un, représenté en 10 aux figures, par un capteur, dit de détection de forme aplatie ou concave du dôme qui déclenche, à l'état activé, le fonctionnement du générateur 5 d'air pendant une période prédéterminée pour assurer le gonflage de la chambre 4 à air pendant ladite période. L'autre capteur 11 est un capteur dit de détection de la forme renflée ou convexe du dôme qui commande, à l'état activé, l'arrêt du générateur 5 d'air. Ce capteur 11 commande en outre, à l'état activé, l'ouverture complète de l'organe 15 de fermeture du canal 9 d'échappement d'air du générateur 5 d'air pour supprimer tout risque d'éclatement de la chambre à air du pousseur 4. Ainsi, l'asservissement du fonctionnement du générateur d'air à la forme du dôme s'effectue tel que suit. Lorsque le capteur 10, qui suit par l'intermédiaire du bras 16 les variations de forme du dôme, est activé, une temporisation 12 de quelques secondes est déclenchée pour confirmer que l'activation n'est pas due par exemple au vent qui aurait entraîné une déformation temporaire de la bâche 3 de couverture. Une fois le délai déclenché par la temporisation achevé, la soufflerie 8 est mise en route pendant une période de temps prédéterminée fixée généralement à l'aide d'une minuterie non représentée. La mise en fonctionnement de la soufflerie 8 engendre un gonflage de la chambre 4 à air de l'élément pousseur. Lorsque la période de temps prédéterminée à l'aide de la minuterie est achevée, la soufflerie 8 s'arrête. Le clapet 14 du canal 7 d'insufflation d'air est refermé.

Si, pendant la période de gonflage correspondant à celle fixée par la minuterie, le capteur 11 de détection de la forme convexe ou renflée du dôme est activé, ce dernier commande automatiquement l'arrêt de la soufflerie 8 à l'aide d'un contacteur. Ce capteur 11 agit donc comme une sécurité dans le cas notamment de panne de la minuterie. Lorsque ce capteur 11 de détection de la position renflée ou convexe du dôme est activé, outre le fait qu'il stoppe la soufflerie 8, il commande en outre l'ouverture complète du clapet 15 constituant l'organe d'obturation du canal 9 d'échappement d'air pour obtenir un échappement d'air maximal et un dégonflage le plus rapide possible de la chambre 4 à air. Dès que l'activation du capteur 11 cesse, le clapet 15 reprend la position prédéterminée qui lui a été assignée pour générer une fuite d'air de débit prédéterminé. Grâce à la présence de ces différents moyens d'asservissement du fonctionnement du générateur 5 d'air à la forme du dôme, il devient possible de maintenir la forme du dôme sensiblement constante indépendamment du niveau de fluide à l'intérieur du bassin 1 et/ou indépendamment des variations de température extérieure. Il est également prévu un disjoncteur 13 général du générateur. Dans l'exemple précité, les moyens de détection de la forme agissent donc par contact d'appui sur la face apparente de l'élément 3 de couverture formant bâche.

Pour conférer, lors du gonflage, une forme prédéterminée à la chambre 4 à air, les parois latérales en regard de la chambre à air constitutive de l'élément 4 pousseur flottant sont entretoisées. Ces entretoises, qui peuvent être constituées par exemple de sangle, empêchent une déformation radiale de la chambre lors du gonflage. Ces sangles sont disposées de manière telle qu'elles relient les parois latérales en regard de ladite chambre entre elles. Ces sangles, qui forment ainsi un quadrillage de la surface intérieure de la chambre, peuvent être disposées à différents niveaux de cette dernière.

Grâce à cette conception du dispositif de couverture, tout bassin 1 de réception, fermé au moyen d'un tel dispositif de couverture, peut être alimenté en permanence en liquide avec une variation de niveau du liquide qui ne nuit en rien à l'efficacité du dispositif de couverture.

## Revendications

1. Dispositif de couverture de bassin (1) de réception de liquide (18), en particulier pollueur d'atmosphère, tel que du lisier, ce dispositif comprenant principalement une bâche (3) de couverture venant à recouvrement sur les bords du bassin (1) pour isoler le contenu du bassin (1) avec l'atmosphère environnante, au moins une chambre (4) à air conférant à la bâche (3) de couverture une forme de dôme en vue de permettre l'évacuation des eaux de ruissellement, notamment celles issues des intempéries, cette chambre (4) à air étant gonflable par raccordement à un dispositif (5) générateur d'air pourvu généralement d'au moins un canal (7) d'insufflation d'air,
**caractérisé en ce que** le dispositif de couverture comporte en outre des moyens (10, 11) de détection de la forme du dôme qui asservissent le gonflage et/ou le dégonflage de la chambre (4) à air, conférant au dispositif de couverture sa forme de dôme, aux modifications de forme du dôme résultant notamment de variations de la température extérieure et/ou de variations du niveau de liquide dans le bassin (1) de manière, notamment, à pouvoir maintenir sensiblement constante la forme du dôme, y compris lors de variations du niveau du bassin (1) ou de la température extérieure.

2. Dispositif de couverture de bassin (1) selon la revendication 1,
**caractérisé en ce que** la chambre (4) à air, associée à un élément de couverture de type bâche (3), est positionnable à la surface du contenu du bassin (1) pour former un élément pousseur flottant à la surface du contenu du bassin et conférant en permanence à la bâche (3) la forme d'un dôme en vue de permettre l'évacuation des eaux de ruissellement, notamment celles issues des intempéries.

3. Dispositif de couverture de bassin (1) selon la revendication 1,
**caractérisé en ce que** la chambre (4) à air, associée à un élément de couverture de type bâche (3), est positionnable en appui sur un plan (6) de soutien généralement de type caillebotis venant à recouvrement du plan d'ouverture du bassin (1) pour former un élément pousseur conférant à la bâche (3) la forme d'un dôme.

4. Dispositif de couverture de bassin (1) selon la revendication 1,
**caractérisé en ce que** la chambre (4) à air est, au moins en dehors des périodes de gonflage, apte à être mise à l'échappement pour créer une fuite d'air permanente ou temporaire.

5. Dispositif de couverture de bassin (1) selon la revendication 1,
**caractérisé en ce que** la chambre (4) à air comporte au moins une entrée (21) et une sortie (22) d'air, l'entrée (21) d'air étant en permanence raccordée au dispositif (5) générateur d'air, en particulier à un canal (7) d'insufflation d'air dudit générateur (5) tandis que la sortie (22) d'air, obturable, est agencée pour être mise à l'échappement au moins en dehors des périodes de gonflage de la chambre (4) à air pour créer une fuite d'air, de préférence permanente, le fonctionnement du générateur (5) d'air, en particulier l'ouverture du canal (7) d'insufflation d'air dudit générateur (5), pour obtenir un gonflable de la chambre (4), étant asservi à la forme du dôme formé par la bâche (3).

6. Dispositif de couverture selon la revendication 5,
**caractérisé en ce que** l'entrée (21) et la sortie (22) d'air de la chambre (4) à air sont constituées par un même orifice raccordable au dispositif (5) générateur d'air.

7. Dispositif de couverture selon la revendication 1,
**caractérisé en ce que** le générateur (5) d'air comporte, raccordés à la chambre à air, un canal (7) d'insufflation d'air et un canal (9) d'échappement d'air, de préférence obturable, apte à créer une fuite au moins en dehors des périodes de gonflage, pour maintenir sensiblement constante la forme du dôme.

8. Dispositif de couverture selon la revendication 7,
**caractérisé en ce que** le canal (7) d'insufflation d'air, muni en entrée de moyens (8) de soufflage, tels qu'une turbine, et le canal (9) d'échappement d'air sont constitués, sur au moins une partie de leur longueur, par un seul et même canal raccordable à la chambre (4) à air.

9. Dispositif de couverture selon la revendication 7,
**caractérisé en ce que** le canal (9) d'échappement d'air est muni d'un organe, tel qu'un clapet (15), de fermeture, réglable en position pour créer une fuite d'air de débit ajustable, cet organe (15) de fermeture étant éventuellement asservi en position à la forme du dôme de couverture.

10. Dispositif de couverture selon la revendication 1,
**caractérisé en ce que** le générateur (5) d'air est couplé à au moins deux capteurs (10, 11) de détection de la forme du dôme, l'un (10) des capteurs (10, 11), dit de détection de la forme aplatie, voire concave, du dôme, déclenchant, à l'état activé, le fonctionnement du générateur (5) d'air pendant une période prédéterminée pour assurer le gonflage de la chambre (4) à air pendant ladite période, l'autre capteur (11), dit de détection de la forme renflée ou convexe du dôme, commandant, à l'état activé, l'arrêt du générateur (5) d'air.

11. Dispositif de couverture selon la revendication 10,
**caractérisé en ce que** le capteur (11), dit de détection de la forme renflée ou convexe du dôme, commande en outre, à l'état activé, un échappement d'air maximal de la chambre (4) à air pour provoquer un dégonflage le plus rapide possible de ladite chambre.

12. Dispositif de couverture selon la revendication 10,
**caractérisé en ce que** les capteurs (10, 11) de détection sont associés à un support mobile, extérieur au dôme et en appui sur ce dernier, pour suivre les changements de forme du dôme.

13. Dispositif de couverture selon l'une des revendications 1 à 12,
**caractérisé en ce que** le générateur (5) d'air comporte un bras extérieur au dôme de type palpeur pour agir sur l'ouverture du canal (7) d'insufflation d'air du générateur d'air lors d'une déformation du dôme de couverture.

14. Dispositif (5) générateur d'air pour le gonflage d'au moins une chambre (4) à air d'un dispositif de couverture en forme de dôme, du type venant à recouvrement de la surface d'un bassin (1) de réception de liquide (18), en particulier pollueur d'atmosphère, pour isoler le contenu du bassin (1) avec l'atmosphère environnante, ce dispositif (5) générateur d'air comportant des moyens d'insufflation d'air comprenant au moins un canal (7) d'insufflation d'air, de préférence obturable, muni en entrée d'une soufflerie (8) et raccordé en sortie à au moins une chambre (4) à air d'un dispositif de couverture conforme à l'une des revendications 1 à 13,
**caractérisé en ce que** le générateur (5) d'air est couplé à des moyens (10, 11) de détection de la forme du dôme qui asservissent le fonctionnement des moyens d'insufflation d'air à la forme du dôme pour maintenir, de préférence sensiblement constante, la forme du dôme en vue de permettre l'évacuation des eaux de ruissellement, notamment celles issues des intempéries.

15. Dispositif générateur d'air selon la revendication 14,
**caractérisé en ce que** le générateur d'air comporte, raccordables à la chambre (4) à air du dispositif de couverture, un canal (7) d'insufflation d'air et un canal (9) d'échappement d'air, de préférence obturable, apte à créer, au niveau de la chambre (4) à air, une fuite, éventuellement permanente en dehors des périodes de gonflage, pour maintenir sensiblement constante la forme du dôme, le canal (7) d'insufflation d'air et le canal (9) d'échappement d'air du générateur d'air étant de préférence constitués, sur au moins une partie de leur longueur, par un seul et même canal raccordable à la chambre (4) à air du dispositif de couverture.

16. Dispositif générateur d'air selon la revendication 15,
**caractérisé en ce que** le canal (9) d'échappement d'air est muni d'un organe (15) de fermeture, tel qu'un clapet, réglable en position pour créer une fuite d'air de débit ajustable, cet organe (15) de fermeture du canal (9) d'échappement d'air étant de préférence asservi en fonctionnement aux moyens (10, 11) de détection de la forme du dôme.

17. Dispositif générateur d'air selon la revendication 14,
**caractérisé en ce que** le générateur d'air est couplé à au moins deux capteurs (10, 11) de détection de la forme du dôme, lesdits capteurs (10, 11) étant de préférence associés à un support (16, 17) mobile extérieur au dôme et en appui sur ce dernier pour suivre les changements de forme du dôme, l'un (10) des capteurs, dit de détection de la forme aplatie ou concave du dôme, déclenchant, à l'état activé, le fonctionnement du générateur (5) d'air pendant une période prédéterminée pour assurer le gonflage de la chambre (4) à air pendant ladite période, l'autre capteur (11), dit de détection de la forme convexe ou renflée du dôme, commandant, à l'état activé, l'arrêt du générateur (5) d'air.

## Claims

1. Device for covering a tank (1) for receipt of liquid (18), which in particular is an atmospheric pollutant, such as liquid manure, this device comprising mainly a covering tarpaulin (3) which overlaps the edges of the tank (1) in order to isolate the content of the tank (1) from the surrounding atmosphere, at least one air chamber (4) which provides the covering tarpaulin (3) with the form of a dome in order to permit discharge of dripping water, in particular that which is derived from inclement weather, this air chamber (4) being inflatable by connection to an air generator device (5) which is generally provided with at least one air inflation duct (7), **characterised in that** the covering device additionally comprises means (10, 11) for detection of the form of the dome, which make the inflation and/or deflation of the air chamber (4), which provides the covering device with its dome shape, subject to the modifications of form of the dome caused in particular by variations of the external temperature and/or variations of the level of liquid in the tank (1) so as, in particular, to be able to maintain the form of the dome substantially constant, including during variations of the level of the tank (1) or of the external temperature.

2. Device for covering a tank (1) according to claim 1, **characterised in that** the air chamber (4), associated with a covering element of the tarpaulin type (3), can be positioned on the surface of the content of the tank (1) in order to form a thrust element which floats on the surface of the content of the tank, and provides the tarpaulin (3) permanently with the form of a dome in order to permit discharge of dripping water, in particular that which is derived from inclement weather.

3. Device for covering a tank (1) according to claim 1, **characterised in that** the air chamber (4), associated with a covering element of the tarpaulin type (3), can be positioned supported on a support plane (6) which is generally of the duckboard type, which overlaps the opening plane of the tank (1) in order to form a thrust element which provides the tarpaulin (3) with the form of a dome.

4. Device for covering a tank (1) according to claim 1, **characterised in that** the air chamber (4) can, at least except during the inflation periods, be subjected to escapement in order to create a permanent or temporary escape of air.

5. Device for covering a tank (1) according to claim 1, **characterised in that** the air chamber (4) comprises at least one air intake (21) and one air outlet (22), the air intake (21) being permanently connected to the air generator device (5), in particular to an air inflation duct (7) of the said generator (5), whereas the air outlet (22), which can be closed, is arranged such as to be subjected to escapement at least except during the inflation periods of the air chamber (4), in order to create escape of air which is preferably permanent, the functioning of the air generator (5), and in particular the opening of the air inflation duct (7) of the said generator (5) in order to obtain inflation of the chamber (4), being subject to the form of the dome formed by the tarpaulin (3).

6. Covering device according to claim 5, **characterised in that** the air intake (21) and the air outlet (22) of the air chamber (4) consist of a single aperture which can be connected to the air generator device (5).

7. Covering device according to claim 1, **characterised in that** the air generator (5) comprises, connected to the air chamber, an air inflation duct (7) and an air escapement duct (9), which can preferably be closed, and can create escape at least except during the inflation periods, in order to maintain the form of the dome substantially constant.

8. Covering device according to claim 7, **characterised in that** the air inflation duct (7), which is provided at its intake with inflation means (8), such as a turbine, and the air escapement duct (9), consist, along at least part of their length, of a single duct which can be connected to the air chamber (4).

9. Covering device according to claim 7, **characterised in that** the air escapement duct (9) is provided with a unit, such as a closure flap valve (15), the position of which can be regulated in order to create escape of air with an adjustable flow, the position of this closure unit (15) optionally being subject to the form of the covering dome.

10. Covering device according to claim 1, **characterised in that** the air generator (5) is coupled to at least two sensors (10, 11) for detection of the form of the dome, one (10) of the sensors (10, 11), known as the sensor for detection of the flattened or concave form of the dome, triggering in the active state the functioning of the air generator (5) for a predetermined period in order to assure inflation of the air chamber (4) during this period, the other sensor (11), known as the sensor for detection of the inflated or convex form of the dome, commanding in the active state the stoppage of the air generator (5).

11. Covering device according to claim 10, **characterised in that** the sensor (11), known as the sensor for detection of the inflated or convex form of the dome, also commands in the active state maximal escapement of air from the air chamber (4), in order to give rise to the fastest possible deflation of the said chamber.

12. Covering device according to claim 10, **characterised in that** the detection sensors (10, 11) are associated with a mobile support which is on the exterior of the dome and is supported on the latter, in order to follow the changes of form of the dome.

13. Covering device according to any one of claims 1 to 12, **characterised in that** the air generator (5) comprises an arm on the exterior of the dome, of a sensor type, in order to act on the opening of the air inflation duct (7) of the air generator during deformation of the covering dome.

14. Air generator device (5) for inflation of at least one air chamber (4) of a covering device in the form of a dome, of the type which covers the surface of a tank (1) for receipt of liquid (18), which in particular is an atmospheric pollutant, in order to isolate the content of the tank (1) from the surrounding atmosphere, this air generator device (5) comprising air inflation means comprising at least one air inflation duct (7) which can preferably be closed, which is provided at its intake with a blower (8) and is connected at its output to at least one air chamber (4) of a covering device according to one of claims 1 to 13, **characterised in that** the air generator (5) is coupled to means (10, 11) for detection of the form of the dome, which make the functioning of the air inflation means subject to the form of the dome, in order to maintain the form of the dome preferably substantially constant, such as to permit discharge of dripping water, in particular that which is derived from inclement weather.

15. Air generator device according to claim 14, **characterised in that** the air generator comprises, such that they can be connected to the air chamber (4) of the covering device, an air inflation duct (7) and an air escapement duct (9), which can preferably be closed, which, at the level of the air chamber (4), can create optionally permanent escape except during the inflation periods, in order to maintain the form of the dome substantially constant, the air inflation duct (7) and the air escapement duct (9) of the air generator preferably consisting, along at least part of their length, of a single duct which can be connected to the air chamber (4) of the covering device.

16. Air generator device according to claim 15, **characterised in that** the air escapement duct (9) is provided with a closure unit (15), such as a flap valve, the position of which can be regulated in order to create air escape with an adjustable flow, the functioning of this unit (15) for closure of the air escapement duct (9) preferably being subject to the means (10, 11) for detection of the form of the dome.

17. Air generator device according to claim 14, **characterised in that** the air generator is coupled to at least two sensors (10, 11) for detection of the form of the dome, the said sensors (10, 11) preferably being associated with a mobile support (16, 17) which is on the exterior of the dome and is supported on the latter in order to follow the changes of form of the dome, one (10) of the sensors, known as the sensor for detection of the flattened or concave form of the dome, triggering in the active state the functioning of the air generator (5) for a predetermined period in order to assure inflation of the air chamber (4) during this period, the other sensor (11), known as the sensor for detection of the inflated or convex form of the dome, commanding in the active state the stoppage of the air generator (5).

## Patentansprüche

1. Vorrichtung zum Abdecken eines Beckens (1) zur Aufnahme von Flüssigkeiten (18), insbesondere die Atmosphäre verschmutzenden Flüssigkeiten wie Gülle, die vor allem eine Abdeckplane (3) umfasst, die das Becken (1) an den Rändern abdeckt, um den Inhalt des Beckens (1) von der Umgebungsatmosphäre zu trennen, wobei mindestens eine Luftkammer (4) der Abdeckplane (3) die Form einer Kuppel gibt, um die Ableitung von Wasserabflüssen, insbesondere aus Niederschlägen, zu ermöglichen, wobei die Luftkammer (4) durch Anschluss an eine Lufterzeugungsvorrichtung (5), im allgemeinen mit mindestens einem Lufteinblaskanal (7) ausgestattet ist, **dadurch gekennzeichnet, dass** die Abdeckvorrichtung zudem Mittel (10, 11) zur Erkennung der Kuppelform umfasst, die das Befüllen und/oder das Entleeren der Luftkammer (4), die der Abdeckvorrichtung ihre Kuppelform gibt, entsprechend den Veränderungen der Kuppelform, die insbesondere aus Schwankungen der Außentemperatur und/oder Schwankungen des Flüssigkeitsstandes im Becken (1) folgen, regeln, so dass die Kuppelform auch bei Schwankungen des Flüssigkeitsstandes im Becken (1) oder der Außentemperatur insbesondere im wesentlichen konstant gehalten werden kann.

2. Vorrichtung zum Abdecken eines Beckens (1) nach Anspruch 1, **dadurch gekennzeichnet, dass** die Luftkammer (4), die einem Abdeckelement vom Typ Plane (3) zugeordnet ist, auf der Oberfläche des Inhalts des Beckens (1) positionierbar ist, um ein Schubelement zu bilden, das auf der Oberfläche des Beckeninhalts schwimmt, und der Plane (3) dauerhaft die Form einer Kuppel zu geben, um die Ableitung von Wasserabflüssen, insbesondere aus Niederschlägen, zu ermöglichen.

3. Vorrichtung zum Abdecken eines Beckens (1) nach Anspruch 1, **dadurch gekennzeichnet, dass** die Luftkammer (4), die einem Abdeckelement vom Typ Plane (3) zugeordnet ist, auf einer Tragebene (6), im allgemeinen vom Typ Gitterrost, die die Ebene der Öffnung des Beckens (1) abdeckt, aufliegend positionierbar ist, um ein Schubelement zu bilden, das der Plane (3) die Form einer Kuppel gibt.

4. Vorrichtung zum Abdecken eines Beckens (1) nach Anspruch 1, **dadurch gekennzeichnet, dass** die Luftkammer (4) mindestens außerhalb der Befüllungszeiten abgelassen werden kann, um ein dauerhaftes oder vorübergehendes Ausströmen von Luft zu erzeugen.

5. Vorrichtung zum Abdecken eines Beckens (1) nach Anspruch 1, **dadurch gekennzeichnet, dass** die Luftkammer (4) mindestens einen Lufteinlass (21) und einen Luftaustritt (22) umfasst, wobei der Lufteinlass (21) dauerhaft an die Lufterzeugungsvorrichtung (5), insbesondere an einen Lufteinblaskanal (7) der Lufterzeugungsvorrichtung (5), angeschlossen ist, während der verschließbare Luftaustritt so gestaltet ist, dass er mindestens außerhalb der Befüllungszeiten der Luftkammer (4) abgelassen werden kann, um ein vorzugsweise dauerhaftes Ausströmen von Luft zu erzeugen, wobei die Funktion des Lufterzeugers (5), insbesondere die Öffnung des Lufteinblaskanals (7) des Lufterzeugers (5), entsprechend der von der Plane (3) gebildeten Kuppelform geregelt wird, um ein Befüllen der Luftkammer (4) zu erhalten.

6. Abdeckvorrichtung nach Anspruch 5, **dadurch gekennzeichnet, dass** der Lufteinlass (21) und der Luftaustritt (22) der Luftkammer (4) von einer einzigen Öffnung gebildet werden, die an die Lufterzeugungsvorrichtung (5) angeschlossen werden kann.

7. Abdeckvorrichtung nach Anspruch 1, **dadurch gekennzeichnet, dass** der Lufterzeuger (5), der an die Luftkammer angeschlossen ist, einen Lufteinblaskanal (7) und einen vorzugsweise verschließbaren Luftabblaskanal (9) umfasst, der mindestens außerhalb der Befüllungszeiten ein Ausströmen von Luft erzeugt, um die Kuppelform im wesentlichen konstant zu halten.

8. Abdeckvorrichtung nach Anspruch 7, **dadurch gekennzeichnet, dass** der Lufteinblaskanal (7), der am Einlass mit Einblasmitteln (8) wie einer Turbine versehen ist, und der Luftabblaskanal (9) über mindestens einen Teil ihrer Länge von ein und demselben Kanal gebildet werden, der an die Luftkammer (4) angeschlossen werden kann.

9. Abdeckvorrichtung nach Anspruch 7, **dadurch gekennzeichnet, dass** der Luftabblaskanal (9) mit einem Element wie einer Verschlussklappe (15) ausgestattet ist, das verstellbar ist, um ein Ausströmen von Luft mit einstellbarer Ausströmmenge zu erzeugen, wobei die Stellung des Verschlusselements (15) gegebenenfalls entsprechend der Kuppelform der Abdeckung geregelt wird.

10. Abdeckvorrichtung nach Anspruch 1, **dadurch gekennzeichnet, dass** der Lufterzeuger (5) mit mindestens zwei Messwertgebern (10, 11) zur Erkennung der Kuppelform gekoppelt ist, wobei der eine (10) der Messwertgeber (10, 11), so genannt zur Erkennung der abgeflachten oder konkaven Form der Kuppel, im aktivierten Zustand den Betrieb des Lufterzeugers (5) in einem vorher festgelegten Zeitraum auslöst, um das Befüllen der Luftkammer (4) während des Zeitraums sicherzustellen, und wobei der andere Messwertgeber (11), so genannt zur Erkennung der bauchigen oder konvexen Form der Kuppel, im aktivierten Zustand das Abschalten des Lufterzeugers (5) steuert.

11. Abdeckvorrichtung nach Anspruch 10, **dadurch gekennzeichnet, dass** der Messwertgeber (11), so genannt zur Erkennung der bauchigen oder konvexen Form der Kuppel, im aktivierten Zustand zudem ein maximales Ausströmen von Luft aus der Luftkammer (4) steuert, um ein schnellstmögliches Entleeren der Luftkammer herbeizuführen.

12. Abdeckvorrichtung nach Anspruch 10, **dadurch gekennzeichnet, dass** die Messwertgeber (10, 11) einer beweglichen Halterung zugeordnet sind, die außen an der Kuppel angebracht ist und an der Kuppel aufliegt und so die Veränderungen der Kuppelform verfolgt.

13. Abdeckvorrichtung nach einem der Ansprüche 1 bis 12, **dadurch gekennzeichnet, dass** der Lufterzeuger (5) außen an der Kuppel einen Arm vom Typ Fühler umfasst, um bei einer Verformung der Abdeckkuppel auf die Öffnung des Lufteinblaskanals (7) des Lufterzeugers zu wirken.

14. Lufterzeugungsvorrichtung (5) zum Befüllen von mindestens einer Luftkammer (4) einer Abdeckvorrichtung in Kuppelform, die die Oberfläche eines Beckens (1) zur Aufnahme von Flüssigkeiten (18), insbesondere die Atmosphäre verschmutzenden Flüssigkeiten, abdeckt, um den Inhalt des Beckens (1) von der Umgebungsatmosphäre zu trennen, wobei die Lufterzeugungsvorrichtung (5) Lufteinblasmittel umfasst, die mindestens einen vorzugsweise verschließbaren Lufteinblaskanal (7) umfassen, der am Einlass mit einem Gebläse (8) und am Austritt an mindestens eine Luftkammer (4) einer Abdeckvorrichtung nach einem der Ansprüche 1 bis 13 angeschlossen ist, **dadurch gekennzeichnet, dass** der Lufterzeuger (5) mit Mitteln (10, 11) zur Erkennung der Kuppelform gekoppelt ist, die den Betrieb der Lufteinblasmittel entsprechend der Kuppelform steuern, um die Kuppelform vorzugsweise im wesentlichen konstant zu halten, um eine Ableitung von Wasserabflüssen, insbesondere aus Niederschlägen, zu ermöglichen.

15. Lufterzeugungsvorrichtung nach Anspruch 14, **dadurch gekennzeichnet, dass** der Lufterzeuger einen an die Luftkammer (4) der Abdeckvorrichtung anschließbaren Lufteinblaskanal (7) und einen an die Luftkammer (4) der Abdeckvorrichtung anschließbaren, vorzugsweise verschließbaren Luftabblaskanal (9) umfasst, der an der Luftkammer (4) ein außerhalb der Befüllungszeiten gegebenenfalls dauerhaftes Ausströmen von Luft erzeugt, um die Kuppelform im wesentlichen konstant zu halten, wobei der Lufteinblaskanal (7) und der Luftabblaskanal (9) des Lufterzeugers vorzugsweise über mindestens einen Teil ihrer Länge von ein und demselben Kanal gebildet werden, der an die Luftkammer (4) der Abdeckvorrichtung angeschlossen werden kann.

16. Lufterzeugungsvorrichtung nach Anspruch 15, **dadurch gekennzeichnet, dass** der Luftabblaskanal (9) mit einem Verschlusselement (15) wie einer Klappe ausgestattet ist, das verstellbar ist, um ein Ausströmen von Luft mit einstellbarer Ausströmmenge zu erzeugen, wobei das Verschlusselement (15) des Luftabblaskanals (9) vorzugsweise von den Mitteln (10, 11) zur Erkennung der Kuppelform geregelt wird.

17. Lufterzeugungsvorrichtung nach Anspruch 14, **dadurch gekennzeichnet, dass** der Lufterzeuger mit mindestens zwei Messwertgebern (10, 11) zur Erkennung der Kuppelform gekoppelt ist, wobei die Messwertgeber (10, 11) vorzugsweise einer beweglichen Halterung (16, 17) zugeordnet sind, die außen an der Kuppel angebracht ist und an der Kuppel aufliegt und so die Veränderungen der Kuppelform verfolgt, wobei der eine (10) der Messwertgeber, so genannt zur Erkennung der abgeflachten oder konkaven Form der Kuppel, im aktivierten Zustand den Betrieb des Lufterzeugers (5) in einem vorher festgelegten Zeitraum auslöst, um das Befüllen der Luftkammer (4) während des Zeitraums sicherzustellen, und wobei der andere Messwertgeber (11), so genannt zur Erkennung der bauchigen oder konvexen Form der Kuppel, im aktivierten Zustand das Abschalten des Lufterzeugers (5) steuert.
